# EUROPÄISCHE PATENTSCHRIFT

(11) **EP 4 029 092 B1**
(45) Veröffentlichungstag und Bekanntmachung des Hinweises auf die Patenterteilung: **23.07.2025**
(21) Anmeldenummer: 20768552.0
(22) Anmeldetag: 07.09.2020
(51) Int. Cl.: H01R 43/28, H01R 43/02, H02G 1/00, H01R 4/02, B23K 3/08

(54) **VERFAHREN ZUM BEARBEITEN DER ENDEN VON MINDESTENS EINEM ELEKTRISCHEN LEITER**
METHOD FOR TREATING THE ENDS OF AT LEAST ONE ELECTRICAL CONDUCTOR
PROCÉDÉ DE TRAITEMENT DES EXTRÉMITÉS D'AU MOINS UN CONDUCTEUR ÉLECTRIQUE

(30) Priorität: 09.09.2019 DE 102019124131
(43) Veröffentlichungstag der Anmeldung: 20.07.2022
(73) Patentinhaber: Strunk Connect Automated Solutions GmbH & Co. KG, 57548 Kirchen-Freusburg (DE)
(72) Erfinder: STRUNK, Olaf, 57548 Kirchen (DE)
(74) Vertreter: Klüppel, Walter
(86) Internationale Anmeldenummer: PCT/EP2020/074916
(87) Internationale Veröffentlichungsnummer: WO 2021/048043

(56) Entgegenhaltungen:
- EP-A1- 3 340 399
- US-A1- 2013 283 605

## Beschreibung

Die Erfindung betrifft ein Verfahren zum Bearbeiten der Enden von mindestens einem elektrischen Leiter beliebiger Geometrie, wobei es sich bei den elektrischen Leitern um Kabel, insbesondere Kabel mit mehreren Adern sowie um Litze wie Zopf- oder Flachlitzen handeln kann.

Beim automatischen bzw. teilautomatischen Verarbeiten von elektrischen Leitern mit großen Querschnitten und unterschiedlichen Geometrien muss beim Wechsel von einer Geometrie auf eine andere Geometrie der elektrischen Leiter die Vorrichtung zum Bearbeiten der Enden der elektrischen Leiter wie z.B. eine Kompaktiervorrichtung oder eine Schweißvorrichtung und dergleichen sowohl zeitaufwendig als auch kostenintensiv umgerüstet werden. Die jeweils in den Verarbeitungsvorrichtungen vorgesehenen Klemmvorrichtungen für die elektrischen Leiter müssen gegen entsprechende Klemmvorrichtungen anderer Abmessungen der elektrischen Leiter getauscht werden. Dabei entstehen hohe Rüstzeiten, in denen die teuren Vorrichtungen zur Bearbeitung der freien Enden der elektrischen Leiter stillstehen.

Bei diesem automatischen bzw. teilautomatischen Verarbeiten von elektrischen Leitern wurden zwar schon teilweise Produktionsdaten erfasst, die Zuordnung der jeweiligen Daten zu den einzelnen elektrischen Leitern war jedoch nur sehr aufwendig möglich. Wegen der fehlenden Produktionsdaten war auch eine Erkennung von Produktionsfehlern schon während der Produktion kaum möglich. Eine solche Verfahren ist aus dem Dokument US 2013/283605 A1 bekannt.

Der Erfindung liegt die Aufgabe zugrunde, das gattungsgemäße Verfahren so weiterzubilden, dass die hohen, kostenaufwendigen Rüstzeiten entfallen, und in weiteren Schritten eine einfache Fehlererkennung, und eine Nachverfolgung der Produktionsdaten jedes bearbeiteten elektrischen Leiters problemlos möglich ist.

Dieses technische Problem wird durch das im unabhängigen Anspruch 1 offenbarte Verfahren gelöst.

Durch die an den Enden des mindestens einen elektrischen Leiters angeordneten Klemmen lässt sich der mindestens eine elektrische Leiter in den Vorrichtungen zur Bearbeitung der freien Enden des mindestens einen elektrischen Leiters leicht greifen. Individuelle Klemmvorrichtungen für die unterschiedlichen elektrischen Leiter müssen in den Bearbeitungsvorrichtungen nicht mehr vorgesehen werden.

Bedeutsam ist, wenn die Klemmen nach erfolgter Klemmung Außenabmessungen aufweisen, die an Aufnahmen für die Klemmen in der mindestens einen Vorrichtung zur Bearbeitung der freien Enden des mindestens einen elektrischen Leiters angepasst sind.

Damit erfolgt beim Klemmvorgang die Anpassung der Klemmen bzw. Klemmvorrichtung an die Abmessungen in den späteren Bearbeitungsvorrichtungen. Die Innenabmessung der Klemmvorrichtung ist damit an die jeweilig zu verarbeitende elektrischen Leiter angepasst, während die Außenabmessungen aller Klemmen an den in den Verarbeitungsmaschinen vorgesehen Klemmraum angepasst sind. Die Verarbeitungsmaschinen müssen nicht mehr aufwendig umgerüstet werden, da immer Klemmvorrichtungen mit stets gleichen Abmessungen verarbeitet werden.

Von Vorteil ist, dass der mindestens eine elektrische Leiter beim Positionieren in den Nestern in die geplante spätere Einbaulage gebogen wird, und dass der mindestens eine elektrische Leiter nach seiner Klemmung auch entgegen seiner vorgegebenen Biegung gestreckt werden kann, vorzugsweise für die folgenden Bearbeitungsvorrichtungen längs ausgerichtet werden kann.

Durch die Klemmung der gebogenen elektrischen Leiter wird erreicht, dass diese nach erfolgtem Streckvorgang wieder ihre gebogene Form annehmen können, so dass die z.B. einen großen Querschnitt aufweisenden elektrischen Leiter, obwohl sie in der Bearbeitungsmaschine im Wesentlichen gerade ausgerichtet sind, nach erfolgter Bearbeitung wieder in ihre gebogene Ausgangslage zurückkehren, wobei die Biegung der späteren Einbaulage entspricht, so dass trotz großer Querschnitte beim späteren Einbau der elektrischen Leiter keine großen Biegekräfte mehr aufgewandt werden müssen.

Besonders sicher halten die elektrischen Leiter ihre vorgegebene Biegeposition ein, wenn die Klemmen derart kräftig geschlossen werden, dass z. B. mehrere Adern des elektrischen Leiters im Bereich der Klemmung keine Relativbewegung zueinander mehr erfahren können. In diesem Falle ist nicht nur eine Relativbewegung zwischen der Klemme und dem elektrischen Leiter ausgeschlossen, sondern auch noch eine Relativbewegung zwischen den einzelnen Litzen des elektrischen Leiters untereinander.

Vorzugsweise können zwei elektrische Leiter mit durch die Biegung unterschiedlichen Längen, in an die beiden elektrischen Leiter angepasste Nester positioniert und anschließend mit ebenfalls an die elektrischen Leiter angepassten Klemmen geklemmt werden.

Das Positionieren von zwei oder mehreren elektrischen Leitern in einer Bearbeitungsvorrichtung würde sich äußerst schwierig gestalten. Nach dem vorliegenden Verfahren werden die zwei oder mehr elektrischen Leiter mit großem Querschnitt und beliebiger Geometrie bereits vor Einbringen in die Bearbeitungsstation derart geklemmt, dass eine einfache und reproduzierbare Aufnahme der elektrischen Leiter über die Klemmvorrichtung der Bearbeitungsmaschine möglich ist.

Nachahmenswert ist, dass im Anschluss an die Bearbeitung in einer Bearbeitungsvorrichtung bzw. Bearbeitungsstation noch weitere Bearbeitungsstationen folgen können, bei denen alle die zu bearbeitende elektrischen Leiter über die Klemmvorrichtung eingespannt und bearbeitet werden können. Bei allen hintereinander angeordneten Bearbeitungsstationen wie Kompaktiervorrichtung, Schneidvorrichtung, Schweißvorrichtung, Verbindungsvorrichtung usw. müssen die anfangs beschriebenen Einrichtmaßnahmen nicht betrieben werden.

Vorzugsweise weist mindestens eine der Klemmen einen RFID-Chip auf, wobei bei jedem Bearbeitungsschritt die jeweiligen Material- und Produktionsdaten in den Chip eingelesen werden. Darüber lässt sich einfach kontrollieren, ob die richtige Zuordnung von Vorrichtung und Produkt gewählt wurde (Poka Yoke). Es lässt sich aber auch zu jedem Zeitpunkt die Historie der elektrischen Leiter nachverfolgen.

Wenn auch mindestens eines der Nester einen RFID-Chip aufweist, in dem Daten, wie z.B. die Abmessungen der Nester oder deren Typenbezeichnung gespeichert sind, kann ein Abgleich dahingehend erfolgen, ob die verwendeten Nester und der mindestens eine elektrische Leiter zum Produktionsauftrag passen, so dass schon früh z.B. durch eine versehentliche falsche Paarung der elektrischen Leiter zu den Nestern entstehende Fehler aufgezeigt werden können (Poka Yoke).

Vorteilhaft ist, wenn beim letzten Schritt, dem Lösen der Klemmen die auf den mindestens einen RFID-Chip der Klemmen gespeicherten Daten ganz oder teilweise als Code z.B. als Strichcode auf den mindestens einen elektrischen Leiter übertragen wird.

Damit ist auch nach Lösen der Klemmen auf dem elektrischen Leiter die gesamte Produktionshistorie bzw. die wichtigsten Daten für eine individuelle, eindeutige Erkennung gespeichert.

Vorteilhaft ist aber auch, wenn spätestens bei der Übertragung zumindest der wichtigsten Kennungs- bzw. Produktionsdaten vom RFID-Chip der Klemmen auf die elektrischen Leiter, Daten vom RFID-Chip auch an einen externen Computer übertragen werden, wobei die auf den elektrischen Leiter und an den externen Computer übertragenen Daten verschiedenen Umfangs sein können.

Spätestens jetzt lassen sich nochmals ev. Fehler im Produktionsablauf ermitteln. Zudem ist nicht nur die Produktionshistorie auf dem elektrischen Leiter wiedergegeben. Sie kann auch durch Vergleiche über die Eingaben im Computer problemlos ermittelt werden, um so exakt elektrische Leiter benennen und finden zu können. In diesem Falle kann eine eindeutige Kennung auf dem elektrischen Leiter ausreichen, um Zugriff auf alle gespeicherten Produktionsdaten zu erhalten.

Je nach Typ und Form der zu bearbeitenden elektrischen Leiter ist für jede Komponente ein spezielles Nest vorgesehen. Die Nester können dabei auf einer Grundplatte derart angeordnet sein, dass der Abstand der Nester voneinander der Länge der zu bearbeitenden elektrischen Leiter entspricht. Dabei können die Nester in einer Linie aber auch zu einer gedachten Linie versetzt auf der Platte angeordnet sein, so dass die elektrischen Leiter, wenn sie mit ihren Enden in die Nester eingelegt worden sind z.B. gebogen ist. Der Bediener muss dabei die elektrischen Leiter manuell auf beiden Seiten in das entsprechende Nest einführen. Die Enden der elektrischen Leiter werden, sofern sie eine Isolierung aufweisen, mit ihrer Isolierung gegen einen mechanischen Anschlag oder sofern es sich um Litzen handelt mit Ihrem Ende gegen einen Anschlag im Nest angelegt, wobei die Abisolierlänge auf die später erfolgende Bearbeitung eingestellt ist. Dabei können auch zwei oder mehr elektrische Leiter, mit und/oder ohne Isolierung in die entsprechende Aufnahme des jeweiligen Nestes eingeführt werden.

Je nach Querschnitt, z. B. 2 x 50 mm² oder 1 x 70 mm², wird für die elektrischen Leiter jeweils eine entsprechende Klemme vorgesehen, deren Innenabmessungen die Außenabmessungen der aufzunehmenden Kabel bzw. Litzen derart unterschreitet, dass diese nach ihrer Klemmung fest in der Klemme sitzen. Die Außenabmessungen der Klemme sind dabei auf die Aufnahmen der späteren Bearbeitungsstationen abgestimmt.

Der Bediener muss die entsprechenden Klemmen an den jeweiligen elektrischen Leitern befestigen. Das erfolgt im Bereich der Nester, die für die Klemmen entsprechenden Ausnehmungen aufweisen. Anschließend werden die Klemmen aus den Nestern gezogen und z. B. in das Schweißgerät eingesetzt.

Um dabei die Zuordnung der Produkte zu den einzelnen Vorrichtungen und die einzelnen Herstellungsschritte rückverfolgen bzw. überprüfen zu können, können die Nester und die Klemmen RFID-Chips enthalten. Zumindest auf den RFID-Chips der Klemmen können dann während der ganzen Bearbeitung die wesentlichen oder auch sämtliche Materialdaten und Bearbeitungsschritte dokumentiert werden. Entsprechende Daten können sein, Angaben zu den zu verarbeitenden elektrischen Leitern, Auswahl der Nester und Klemmen, Daten des Bedieners, der die Drähte manuell in die Nester einfügt, die Kraft, mit denen die Nester geschlossen werden usw. Werden dabei Ungereimtheiten zwischen zu verarbeitendem elektrischen Leiter und dem verwendeten Nest und/oder den verwendeten Klemmen festgestellt, können frühzeitig Fehler aufgezeigt werden.

Im Schweißgerät werden die elektrischen Leiter über die Klemmen gehalten und anschließend werden die freien Enden der elektrischen Leiter z. B. geschweißt, kompaktiert oder dergleichen. Da in den Bearbeitungsstationen in der Regel aus Platzgründen nur geradeaus gerichtete Kabel bzw. Litzen bearbeitet werden können, werden auch die vorher gebogen hergestellten elektrischen Leiter im Wesentlichen in einer Reihe ausgerichtet. Dabei können, wenn mehrere elektrische Leiter von den Klemmen gehalten werden, z. B. der kürzeste elektrische Leiter halbwegs gerade in der Bearbeitungsstation liegen, während die längeren elektrischen Leiter in der Bearbeitungsstation eine Biegung aufweisen. Wesentlich ist jedoch, dass die Klemmen möglichst platzsparend in einer Reihe positioniert werden.

Nach einem Bearbeitungsschritt, z.B. dem Verschweißen in einer Station können die elektrischen Leiter über die Klemmen aus der Schweißvorrichtung in eine Schneidvorrichtung gegeben werden, wobei die elektrischen Leiter immer wieder über die entsprechenden Klemmen in den jeweiligen Behandlungsstationen fixiert werden und anschließend an ihren Enden bearbeitet werden. Andere oder auch weitere Bearbeitungsschritte, sowie alternative Reihenfolgen der Bearbeitungsschritte sind möglich.

Für eine leichte Handhabung können die Klemmen auch Handhaben aufweisen, an denen die Bedienperson oder aber auch mechanische Greifer angreifen, um die elektrischen Leiter besser transportieren zu können.

Bei allen den Bearbeitungsschritten können neben den Materialdaten die jeweiligen Produktionsdaten der Maschinen z. B. der Schweißstrom, die Schweißzeit oder die Schneidkraft usw. auf dem RFID-Chip der Klemmen gespeichert werden.

Das Schreiben der Daten auf den RFID kostet Zykluszeit in der Maschine. Daher ist es sinnvoll das Volumen der zu schreibenden Daten zu begrenzen. Vorteilhaft werden die umfangreichen Daten in einer zentralen Datenbank gespeichert und auf dem RFID nur elementare Daten, welcher Bearbeitungsschritt ordnungsgemäß oder nicht ornungsgemäß erfolgt ist. Zum Verweis auf die zentral gespeicherten, weiterführenden Daten ist eine eindeutige Kennung des jeweiligen Elektrischen Leiters erforderlich, die folglich im RFID und der Datenbank zu speichern ist.

Nach Fertigstellung der elektrischen Leiter werden diese aus der letzten Bearbeitungsmaschine über die Klemmen entnommen und in einer Entklemmvorrichtung entklemmt. Dabei können sämtliche oder zumindest die wichtigsten auf dem RFID-Chips der Klemmen gespeicherten Kennungs- bzw. Produktionsdaten in Form eines Codes auf den elektrischen Leitern aufgebracht werden. Damit kann auch zu einem späteren Zeitpunkt über den Code auf den elektrischen Leitern genau ausgelesen werden, welche Produktionsschritte bei welchen Produktionsparametern durchlaufen wurden.

Die Erfindung wird anhand einer Zeichnung näher erläutert. Dabei zeigt:
- Figur 1: eine Grundplatte mit im Winkel zueinander angeordneten Nestern,
- Figur 2: zwei in die Nester eingelegte elektrische Leiter mit großem Querschnitt,
- Figur 3: zwei Klemmen für die beiden elektrischen Leiter,
- Figur 4: die um die elektrischen Leiter angebrachten Klemmen in den jeweiligen Nestern,
- Figur 5: gerichtete elektrische Leiter,
- Figur 6: die schematische Darstellung einer Schweißvorrichtung zur Bearbeitung der elektrischen Leiter.

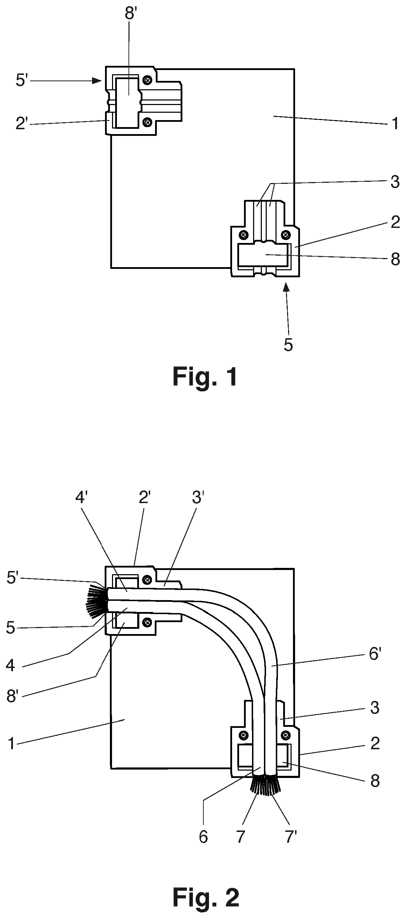

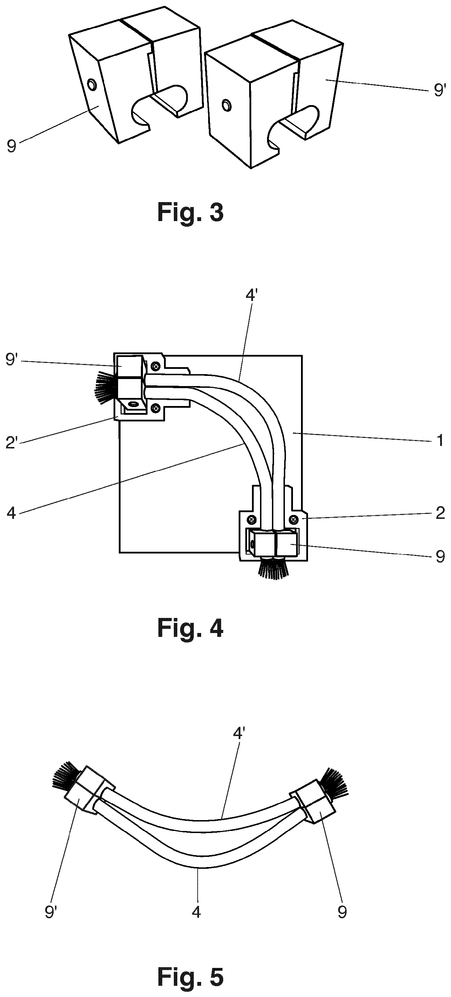

Figuren 1 und 2 zeigen eine Grundplatte 1, auf der zwei Nester 2, 2' angeordnet sind. Die Nester 2, 2' sind in diesem Fall in einem Winkel von 90° zueinander angeordnet. Die Nester 2, 2' weisen jeweils zwei Aufnahmenute 3 auf, in denen die elektrischen Leiter 4, 4' aufgenommen werden können (Fig. 2). Weiterhin weist jedes Nest 2, 2' Anschläge 5, 5' auf, gegen welche die Isolierung 6, 6' der elektrischen Leiter 4, 4', hier Kabel, angestoßen werden können. Über die Anschläge 5, 5' steht die Litze 7, 7' der elektrischen Leiter 4, 4' über. Zwischen den Aufnahmenuten 3, 3' und den Anschlägen 5, 5' sind Ausnehmungen 8, 8' vorgesehen, die später zur Aufnahme von in Figur 3 gezeigten Klemmen 9, 9' dienen. Figur 2 zeigt dabei die Grundplatte 1 mit den Nestern 2, 2', in welche die elektrischen Leiter 4, 4' eingelegt ist. Die Isolierung 6, 6' stößt gegen die Anschläge 5, 5'. Die Litze 7, 7' steht über die Anschläge 5, 5' hervor.

Figur 3 zeigt zwei Klemmen 9, 9', die zur Aufnahme und Klemmung der beiden elektrischen Leiter 4, 4' nach Figur 2 vorgesehen sind.

In Figur 4 ist wiederum die Grundplatte 1 mit den Nestern 2, 2' und den darin aufgenommenen elektrischen Leitern 4, 4' zu erkennen. Weiterhin sind in den Ausnehmungen 8, 8' zwischen den Aufnahmenuten 3, 3' und den Anschlägen 5, 5' (Fig. 1) Klemmen 9, 9' eingesetzt und verklemmt.

Figur 5 zeigt die elektrischen Leiter 4, 4' mit den festgeklemmten Klemmen 9, 9' die aus den Nestern 2 entnommen worden sind. Der elektrischen Leiter 4 ist bereits gegenüber ihrer ursprünglichen Biegung gestreckt, während der elektrische Leiter 4' teilweise gestreckt dargestellt ist. Nach dieser Streckung zumindest des kürzeren elektrischen Leiters 4 stehen die Klemmen 9, 9' in einer Linie und können so z.B. in die Schweißvorrichtung eingebaut werden.

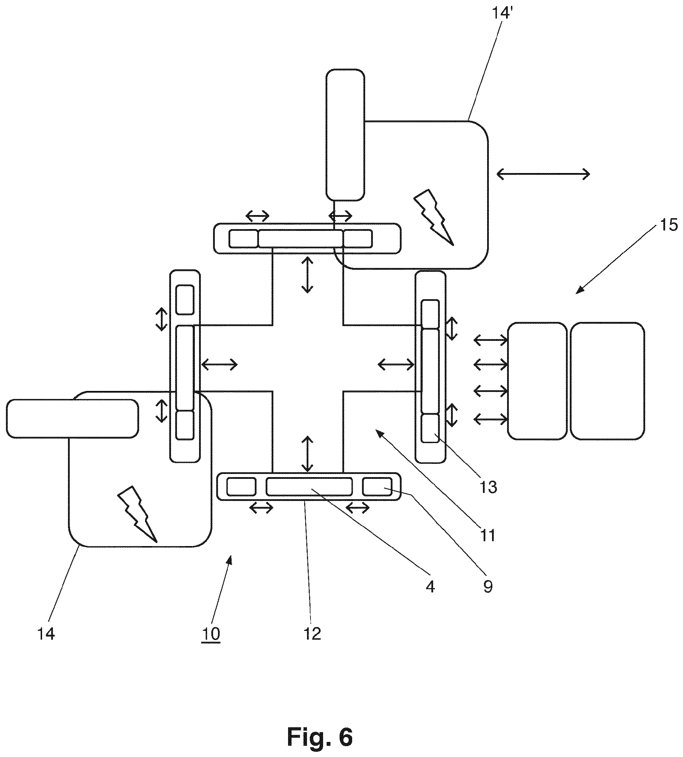

Figur 6 zeigt beispielsweise eine Schweißvorrichtung 10, die vier entsprechende elektrische Leiterstränge über deren Klemmen 9, 9' in einer Drehstation 11 aufnehmen kann. Dabei ist zu erkennen, dass die elektrischen Leiter 4 in einer Eingabestation 12 in die Drehstation 11 eingegeben werden und in einer Entnahmestation 13, nachdem beide Seiten der Kabel verschweißt sind, entnommen werden können.

Durch Drehen der Drehstation 11 wird der elektrische Leiter aus der Eingabestation12 in ein erste Schweißstationen14 überführt, wo das erste Kabelende verschweißt wird. Das zuvor in der Schweißstation 14 befindliche Kabel ist durch den Drehvorgang in die Schweißstation 14' transportiert worden wo das jeweilige zweite Kabelende der Kabel verschweißt wird.

Durch weiteres Drehen um 90° wird dann das erste Kabelende eines dritten Kabels in der Schweißstation 14 verschweißt. Gleichzeitig wird das zweite Ende des zweiten Kabels in der Schweißstation 14' verschweißt, und das erste Kabel welches inzwischen die Entnahmestation 13 erreicht hat wird hier der Schweißvorrichtung 10 entnommen, und an eine Entklemmstation 15 überführt.

In der Entklemmstation 15 werden die auf den nicht dargestellten RFID-Chips der Klemmen 9, 9' aufgenommenen Produktionsdaten in einen Code z.B. Strichcode umgesetzt und auf die elektrischen Leiter 4 aufgedruckt. Ausschussteile können spätestens bei diesem Vorgang erkannt, aussortiert und ggf. vernichtet werden.

### Bezugszeichenübersicht

- 1: Grundplatte
- 2: Nester
- 3: Aufnahmenute
- 4: Elektrische Leiter
- 5: Anschläge
- 6: Isolierung
- 7: Litze
- 8: Ausnehmungen
- 9: Klemmen
- 10: Schweißvorrichtung
- 11: Drehstation
- 12: Eingabestation
- 13: Entnahmestation
- 14: Schweißstationen
- 15: Entklemmstation

## Patentansprüche

1. Verfahren zum Bearbeiten der Enden von mindestens einem elektrischen Leiter (4, 4') beliebiger Geometrie, mit folgenden Schritten,
a) Positionieren der Endbereiche des mindestens einen elektrischen Leiters (4, 4') in auf die Außenabmessungen des elektrischen Leiters (4, 4') abgestimmte Nester (2, 2'), wobei die Nester (2, 2') in einer Linie aber auch zu einer gedachten Linie versetzt auf einer Grundplatte angeordnet sein können, sodass der elektrische Leiter, wenn er mit seinen Endbereichen in eine Aufnahmenut (3, 3') der Nester (2, 2') eingelegt wird, z. B. gebogen wird;
wobei die gegebenenfalls vorhandene Isolierung des elektrischen Leiters, wenn dieser mit seinen Endbereichen in die Aufnahmenut (3, 3') der Nester eingelegt wird, gegen einen Anschlag (5, 5') anstößt, und wobei die Litze (7, 7') des elektrischen Leiters über den Anschlag übersteht;
b) Anbringen von je einer Klemme (9, 9') mit auf die Außenabmessungen des elektrischen Leiters (4, 4') abgestimmten, die Außenabmessungen unterschreitenden Innenabmessungen an den mindestens einen elektrischen Leiter (4, 4') im Bereich der Nester (2, 2'), in einer Ausnehmung (8, 8') zwischen dem Aufnahmeelement (3, 3') und dem Anschlag (5, 5')
und jeweiliges Klemmen der beiden Endbereiche des mindestens einen elektrischen Leiters (4, 4') mit einer derartigen Kraft, dass zwischen elektrischem Leiter (4, 4') und Klemme (9, 9') im weiteren Verfahren keine Relativbewegungen erfolgen, wobei die Klemmen (9, 9') in der Art gesetzt werden, dass die zu bearbeitenden Enden des mindestens einen elektrischen Leiters über die Klemmen (9, 9') hervorstehen,
c) Entnahme des mindestens einen elektrischen Leiters (4, 4') über die Klemmen (9, 9') aus den Nestern (2, 2'),
d) Einbringen des mindestens einen elektrischen Leiters (4, 4') über die Klemmen (9, 9') in mindestens eine Vorrichtung zum Bearbeiten der freien Enden des mindestens einen elektrischen Leiters (4, 4'),
e) Bearbeiten der über die Klemmen (9, 9') hinausstehenden Enden des mindestens einen elektrischen Leiters (4, 4'),
f) Entnehmen des mindestens einen elektrischen Leiters (4, 4') aus der mindestens einen Vorrichtung zur Bearbeitung der Enden des mindestens einen elektrischen Leiters (4, 4') und Lösen sowie Entfernen der Klemmen (9, 9') von dem mindestens einen elektrischen Leiter (4, 4').

2. Verfahren nach Anspruch 1,
**dadurch gekennzeichnet,**
**dass** die Klemmen (9, 9') nach erfolgter Klemmung gemäß Schritt b) Außenabmessungen aufweisen, die an Aufnahmen für die Klemmen (9, 9') in der mindestens einen Vorrichtung zum Bearbeiten der freien Enden des mindestens einen elektrischen Leiters (4, 4') angepasst sind.

3. Verfahren nach Anspruch 1 oder 2,
**dadurch gekennzeichnet,**
**dass** der mindestens eine elektrische Leiter (4, 4') beim Positionieren gemäß Schritt a) in der geplanten späteren Einbaulage gebogen ist, und dass der mindestens eine elektrische Leiter (4, 4') auch entgegen seiner durch die Klemmung gemäß Schritt b) vorgegebene Biegung im Schritt d) gestreckt, vorzugsweise für die Bearbeitungsvorrichtung längs ausgerichtet wird.

4. Verfahren nach einem der Ansprüche 1 bis 3,
**dadurch gekennzeichnet,**
**dass** das Klemmen gemäß Schritt b) bei elektrischen Leitern (4, 4') mit mindestens zwei Adern derart erfolgt, dass die mindestens zwei Adern des mindestens einen elektrischen Leiters (4, 4') im Bereich der Klemmung keine Relativbewegungen zueinander mehr erfahren können.

5. Verfahren nach einem der Ansprüche 1 bis 4,
**dadurch gekennzeichnet,**
**dass** zwei elektrische Leiter (4, 4'), mit durch die Biegung unterschiedlichen Längen, in an die beiden elektrischen Leiter (4, 4') angepasste Nester (2, 2') positioniert und anschließend mit ebenfalls an die beiden elektrischen Leiter (4, 4') angepassten Klemmen (9, 9') geklemmt werden.

6. Verfahren nach einem der Ansprüche 1 bis 5,
**dadurch gekennzeichnet,**
**dass** im Anschluss an Schritt e) der mindestens eine elektrische Leiter (4, 4') aus der Bearbeitungsstation entnommen und in mindestens eine weitere Bearbeitungsstation überführt wird, wobei es sich bei den Bearbeitungsstationen um Kompaktiervorrichtungen und / oder Schneidvorrichtungen und / oder Verschweißvorrichtungen und / oder Verbindungsvorrichtungen zum Anbinden von Anschlüssen handelt, und dass erst im Anschluss daran Schritt f) erfolgt.

7. Verfahren nach einem der Ansprüche 1 bis 6,
**dadurch gekennzeichnet,**
**dass** mindestens eine der Klemmen (9, 9') einen RFID-Chip aufweist, und dass bei jedem Bearbeitungsschritt die jeweiligen Material- und Produktionsdaten in den Chip eingelesen werden.

8. Verfahren nach Anspruch 7,
**dadurch gekennzeichnet,**
**dass** mindestens eines der Nester (2, 2') einen RFID-Chip aufweist, in dem Daten, wie z.B. Abmessungen der Nester (2, 2') gespeichert sind, und dass ein Abgleich erfolgt, ob die verwendeten Nester (2, 2') und der mindestens eine elektrische Leiter (4, 4') zum Produktionsauftrag passen.

9. Verfahren nach Anspruch 7 oder 8,
**dadurch gekennzeichnet,**
**dass** beim Lösen der Klemmen (9, 9') gemäß Schritt f) die auf dem mindestens einen RFID-Chip der Klemmen (9, 9') gespeicherten Daten als Code auf den mindestens einen elektrischen Leiter (4, 4') übertragen wird.

10. Verfahren nach einem der Ansprüche 7 bis 9,
**dadurch gekennzeichnet,**
**dass** spätestens bei der Übertragung der Produktionsdaten vom RFID-Chip der Klemmen (9, 9') auf den mindestens einen elektrischen Leiter (4, 4') diese Daten auch an einen externen Computer übertragen werden, und dass vorzugsweise alle Material- und Produktionsdaten nach Einspeicherung in einen der RFID-Chips auch an den externen Computer übertragen werden.

## Claims

1. A method for the processing of the ends of at least one electrical conductor (4, 4') of any geometry, with the following steps,
a) Positioning of the end regions of the at least one electrical conductor (4, 4') in modules (2, 2') matched to the outer dimensions of the electrical conductor (4, 4'), wherein the modules (2, 2') can be arranged on a base plate in line, or also offset from an imaginary line, such that the electrical conductor, when it is inserted with its end regions into a receiving groove (3, 3') of the modules (2, 2'), is, for example, curved; wherein any insulation of the electrical conductor that may be present, when the latter is inserted with its end regions into the receiving grooves (3, 3') of the modules, abuts against a stop (5, 5'), and wherein the strands (7, 7') of the electrical conductor protrude beyond the stop;
b) Attachment of a clamp (9, 9') in each case, with internal dimensions matched to the external dimensions of the electrical conductor (4, 4'), and less than the external dimensions, to the at least one electrical conductor (4, 4') in the region of the modules (2, 2'), in a recess (8, 8') between the receiving element (3, 3') and the stop (5, 5'), and respective clamping of the two end regions of the at least one electrical conductor (4, 4'), with a force such that no relative movements occur between the electrical conductor (4, 4') and the clamps (9, 9') in the further processing, wherein the clamps (9, 9') are set up in such a way that the ends of the at least one electrical conductor to be processed protrude beyond the clamps (9, 9'),
c) Removal of the at least one electrical conductor (4, 4') from the modules (2, 2') by way of the clamps (9, 9')**,**
d) Introduction of the at least one electrical conductor (4, 4') by way of the clamps (9, 9') into at least one device for the processing of the free ends of the at least one electrical conductor (4, 4'),
e) Processing of the ends of the at least one electrical conductor (4, 4') that protrude beyond the clamps (9, 9')**,**
f) Removal of the at least one electrical conductor (4, 4') from the at least one device for the processing of the ends of the at least one electrical conductor (4, 4'), and release and removal of the clamps (9, 9') from the at least one electrical conductor (4, 4').

2. The method in accordance with Claim 1,
**characterised in that**,
after clamping has taken place in accordance with step b), the clamps (9, 9') have external dimensions that are matched to receptacles for the clamps (9, 9') in the at least one device for the processing of the free ends of the at least one electrical conductor (4, 4').

3. The method in accordance with Claim 1 or 2,
**characterised in that**,
in the course of positioning in accordance with step a), the at least one electrical conductor (4, 4') is curved in the planned subsequent installation position,
and **in that**,
in step d), the at least one electrical conductor (4, 4') is also stretched against its curvature as prescribed by the clamping in accordance with step b), and is preferably aligned longitudinally for the processing device.

4. The method in accordance with one of the Claims 1 to 3,
**characterised in that**,
the clamping in accordance with step b) is carried out on electrical conductors (4, 4') with at least two cores, in such a way that the at least two cores of the at least one electrical conductor (4, 4') can no longer undergo any relative movements with respect to one another in the clamping regions.

5. The method in accordance with one of the Claims 1 to 4,
**characterised in that**,
two electrical conductors (4, 4'), with different lengths as a result of the curvature, are positioned in modules (2, 2') matched to the two electrical conductors (4, 4'), and are then clamped with clamps (9, 9') that are also matched to the two electrical conductors (4, 4') .

6. The method in accordance with one of the Claims 1 to 5,
**characterised in that**,
following step e), the at least one electrical conductor (4, 4') is removed from the processing station, and transferred into at least one further processing station, wherein
the processing stations take the form of compacting devices, and/or cutting devices, and/or welding devices, and/or connecting devices for the connection of terminations,
and **in that**,
step f) only takes place thereafter.

7. The method in accordance with one of the Claims 1 to 6,
**characterised in that**,
at least one of the clamps (9, 9') has an RFID chip,
and **in that**,
the respective material and production data are read onto the chip in the course of each step of the processing.

8. The method in accordance with Claim 7,
**characterised in that**,
at least one of the modules (2, 2') has an RFID chip, on which data, such as dimensions of the modules (2, 2'), are stored,
and **in that**,
a comparison is made as to whether the modules (2, 2') used, and the at least one electrical conductor (4, 4'), match the production order.

9. The method in accordance with Claim 7 or 8,
**characterised in that**,
when the clamps (9, 9') are released in accordance with step f), the data stored on the at least one RFID chip of the clamps (9, 9') are transmitted as a code to the at least one electrical conductor (4, 4').

10. The method in accordance with one of the Claims 7 to 9,
**characterised in that**,
at the latest in the course of transmission of the production data from the RFID chip of the clamps (9, 9') to the at least one electrical conductor (4, 4'), the said data are also transmitted to an external computer,
and **in that**,
all material and production data, after storage on one of the RFID chips, are also preferably transmitted to the external computer.

## Revendications

1. Procédé d'usinage des extrémités d'au moins un conducteur électrique (4, 4') de géométrie quelconque, comprenant les étapes suivantes :
a) positionnement des extrémités d'au moins un conducteur électrique (4, 4') dans des embases (2, 2') adaptés aux dimensions extérieures du conducteur électrique (4, 4'), dans lequel les embases (2, 2') peuvent être alignés ou décalés par rapport à une ligne imaginaire sur une plaque de base, de sorte que le conducteur électrique, lorsqu'il est inséré avec ses extrémités dans une rainure de réception (3, 3') des embases (2, 2'), soit plié, par exemple ; dans lequel l'isolant, s'présent le cas échéant du conducteur électrique, lorsqu'il est inséré avec ses extrémités dans la rainure de réception (3, 3') des logements, bute contre une butée (5, 5'), et dans lequel le fil toronné (7, 7') du conducteur électrique dépasse de la butée ;
b) fixation d'une borne (9, 9') de dimensions intérieures adaptées aux dimensions extérieures du conducteur électrique (4, 4'), mais inférieures aux dimensions extérieures à au moins un conducteur électrique (4, 4') au niveau des embases (2, 2'), dans un évidement (8, 8') entre l'élément de réception (3, 3') et la butée (5, 5') et serrage respectif des deux extrémités d'au moins un conducteur électrique (4, 4') avec une force telle qu'aucun mouvement relatif ne se produise entre le conducteur électrique (4, 4') et la borne (9, 9') pendant la suite du processus, dans lequel les bornes (9, 9') sont placées de telle sorte que les extrémités à usiner d'au moins un conducteur électrique dépassent des bornes (9, 9') ;
c) retrait d'au moins un conducteur électrique (4, 4') des embases (2, 2') via les bornes (9, 9').
d) insertion d'au moins un conducteur électrique (4, 4') via les bornes (9, 9') dans au moins un dispositif d'usinage des extrémités libres d'au moins un conducteur électrique (4, 4') ;
e) usinage des extrémités d'au moins un conducteur électrique (4, 4') dépassant des bornes (9, 9').
f) retrait d'au moins un conducteur électrique (4, 4') d'au moins un dispositif d'usinage des extrémités d'au moins un conducteur électrique (4, 4') puis desserrage et retrait des bornes (9, 9') d'au moins un conducteur électrique (4, 4').

2. Procédé selon la revendication 1, **caractérisé en ce qu'**après le serrage selon l'étape b), les bornes (9, 9') présentent des dimensions extérieures, qui sont adaptées aux réceptacles des bornes (9, 9') dans au moins un dispositif d'usinage des extrémités libres d'au moins un conducteur électrique (4, 4').

3. Procédé selon la revendication 1 ou 2, **caractérisé en ce que** (4, 4') sont pliés dans la position de montage ultérieure prévue lors du positionnement selon l'étape a), et **en ce que** le au moins un conducteur électrique (4, 4') est également étiré à l'étape d) en sens contraire à sa courbure prédéterminée par le serrage selon l'étape b), de préférence alignés longitudinalement pour le dispositif d'usinage.

4. Procédé selon une des revendications 1 à 3, **caractérisé en ce que** le serrage selon l'étape b) pour les conducteurs électriques (4, 4') à au moins deux fils est réalisé de telle sorte que les deux fils d'au moins un conducteur électrique (4, 4') ne puissent plus subir de mouvement relatif dans la zone de serrage.

5. Procédé selon une des revendications 1 à 4, **caractérisé en ce que** deux conducteurs électriques (4, 4'), de longueurs différentes en raison de la courbure, sont positionnés dans des embases (2, 2') adaptées aux deux conducteurs électriques (4, 4'), puis serrés avec des bornes (9, 9') également adaptées aux deux conducteurs électriques (4, 4').

6. Procédé selon une des revendications 1 à 5, **caractérisé en ce qu'**après l'étape e), le au moins un conducteur électrique (4, 4') est retiré du poste de traitement et transféré vers au moins un autre poste de traitement, dans lequel les postes de traitement sont des dispositifs de compactage et/ou de découpe et/ou de soudage et/ou de connexion pour bornes, et que l'étape f) n'a lieu qu'ultérieurement.

7. Procédé selon une des revendications 1 à 6, **caractérisé en ce qu'**au moins une des bornes (9, 9') possède une puce RAD et que les données de matériau et de production respectives sont lues dans la puce à chaque étape de traitement.

8. Procédé selon la revendication 7, **caractérisé en ce qu'**au moins une des embases (2, 2') possède une puce RFID, dans laquelle sont stockées des données, comme par ex. les dimensions des embases (2, 2'), et **en ce qu'**une comparaison est effectuée pour déterminer si les embases (2, 2') utilisées et le au moins un conducteur électrique (4, 4') correspondent à l'ordre de production.

9. Procédé selon la revendication 7 ou 8, **caractérisé en ce que**, lors de la libération des bornes (9, 9') conformément à l'étape f), les données stockées sur la au moins une puce RFID des bornes (9, 9') sont transférées sous forme de code vers le au moins un conducteur électrique (4, 4').

10. Procédé selon une des revendications 7 à 9, **caractérisé en ce que**, au plus tard lors du transfert des données de production de la puce RFID des bornes (9, 9') vers le au moins un conducteur électrique (4, 4'), ces données sont également transférées vers un ordinateur externe, et **en ce que**, de préférence, toutes les données de matériau et de production sont également transférées vers l'ordinateur externe après leur enregistrement dans une des puces RFID.
